# EUROPEAN PATENT APPLICATION

(11) **EP 1 845 475 A1**
(43) Date of publication of application: **17.10.2007**
(21) Application number: 07007174.1
(22) Date of filing: 05.04.2007
(51) Int. Cl.: G06K 7/00, G06K 17/00, G06K 19/07

(54) **Communication medium, communication medium processing apparatus, and communication medium processing system**

(30) Priority: 10.04.2006 JP 2006107710
(71) Applicant: Kabushiki Kaisha Toshiba, Minato-ku, Tokyo 105-8001 (JP)
(72) Inventor: Shimizu, Hiroo, Minato-ku Tokyo 105-8001 (JP)
(74) Representative: HOFFMANN EITLE

(57) **Abstract**

A communication medium according to this embodiment is a communication medium which transmits read data in accordance with a read command from a communication medium processing apparatus and stores write data transmitted in accordance with a write command from the communication medium processing apparatus. This communication medium includes a storage unit (27) configured to store data, a transmission data generating unit (26) configured to divide data stored in the storage unit on a predetermined data unit basis, attach a check code to each divided data obtained by dividing the data, and generate transmission data including a plurality of divided data with the check codes, and a communication unit (21) configured to transmit the transmission data generated by the transmission data generating unit to the communication medium processing apparatus.

## Description

The present invention relates to a communication medium called an IC (Integrated Circuit) card which incorporates an IC including, for example, a nonvolatile data memory and a control element such as a CPU. In addition, the present invention relates to a communication medium processing apparatus, called an IC card reader/writer, which writes data in such a communication medium and reads it out from the medium. Furthermore, the present invention relates to a communication medium processing system which comprises the communication medium and the communication medium processing apparatus.

Japanese Patent No. 2856393 discloses an IC card as a portable communication medium which incorporates an IC chip including a nonvolatile data memory and a control element such as a CPU. In an IC card of this type, the control unit accesses the data memory in accordance with externally input instruction data and selectively inputs/outputs necessary data. In this case, the data memory is divided into a plurality of data areas, and the control element selectively accesses a target area.

ISO/IEC14443-3 TypeB defines the operation and the like of a noncontact communication medium. For example, a noncontact communication medium determines a communication scheme by exchanging information in an initial sequence, e.g., an REQB (Request Command, Type B)/WUPB (Wake-Up Command, Type B) command or an ATTRIB (PICC selection command, Type B) command, and then allows read/write access to the memory contents in the medium in accordance with an upper command, thereby performing processing such as executing various kinds of arithmetic operations. In addition, the processing corresponding to an REQB/WUPB or ATTRIB command determines the maximum value of communication data which can be transmitted/received by one operation, and allows data transfer within the range of the maximum value. For this reason, if the data size of transmission/reception data is larger than the maximum value of communication data, this medium needs to divide the transmission/reception data into small pieces and separately transmit/receive the divided transmission/reception data several times. This requires much time for command/response processing.

It is an object of the present invention to provide a communication medium, communication medium processing apparatus, and communication medium processing system which can shorten the communication processing time.

A communication medium according to this embodiment is a communication medium which transmits read data in accordance with a read command from a communication medium processing apparatus and stores write data transmitted in accordance with a write command from the communication medium processing apparatus, comprising a storage unit configured to store data, a transmission data generating unit configured to divide data stored in the storage unit on a predetermined data unit basis, attach a check code to each divided data obtained by dividing the data, and generate transmission data including a plurality of divided data with check codes, and a communication unit configured to transmit the transmission data generated by the transmission data generating unit to the communication medium processing apparatus.

A communication medium processing apparatus according to this embodiment is a communication medium processing apparatus which receives read data transmitted from a communication medium in accordance with a read command with respect to the communication medium, and transmits write data to the communication medium in accordance with a write command with respect to the communication medium, comprising a storage unit configured to store data, a transmission data generating unit configured to divide data stored in the storage unit on a predetermined data unit basis, attach a check code to each divided data obtained by dividing the data, and generate transmission data including a plurality of divided data with check codes, and a communication unit configured to transmit the transmission data generated by the transmission data generating unit to the communication medium.

A communication medium processing system according to this embodiment comprises a communication medium configured to transmit read data in accordance with a read command from a communication medium processing apparatus and store write data transmitted in accordance with a write command from the communication medium processing apparatus, and a communication medium processing apparatus configured to receive the read data transmitted from the communication medium in accordance with the read command with respect to the communication medium and transmit the write data to the communication medium in accordance with the write command with respect to the communication medium, the communication medium comprising a first storage unit configured to store data, a first transmission data generating unit configured to divide data stored in the first storage unit on a predetermined data unit basis, attach a check code to each divided data obtained by dividing the data, and generate transmission data including a plurality of divided data with check codes, and a first communication unit configured to transmit the transmission data generated by the first transmission data generating unit to the communication medium processing apparatus in accordance with a read command from the communication medium processing apparatus, the communication medium processing apparatus comprising a second storage unit configured to store data, a second transmission data generating unit configured to divide data stored in the second storage unit on a predetermined data unit basis, attach a check code to each divided data obtained by dividing the data, and generate transmission data including a plurality of divided data with check codes, and a second communication unit configured to transmit the transmission data generated by the second transmission data generating unit to the communication medium in accordance with a write command with respect to the communication medium.

The invention can be more fully understood from the following detailed description when taken in conjunction with the accompanying drawings, in which:
FIG. 1 is a block diagram showing the schematic arrangement of an IC card processing system (communication medium processing system) according to an embodiment of the present invention;
FIG. 2 is a view showing the first example (retransmitting all data at the time of occurrence of an error) of a command/response sequence at the time of writing in an IC card;
FIG. 3 is a view showing the second example (retransmitting partial data at the time of occurrence of an error) of a command/response sequence at the time of writing in an IC card;
FIG. 4 is a view showing the first example (retransmitting all data at the time of occurrence of an error) of a command/response sequence at the time of reading from an IC card;
FIG. 5 is a view showing the second example (retransmitting partial data at the time of occurrence of an error) of a command/response sequence at the time of reading from an IC card;
FIG. 6 is a view showing the comparison between the processing time taken in the first example of a command/response sequence at the time of occurrence of an error at the time of writing in an IC card and the processing time taken at the second example of a command/response sequence at the time of occurrence of an error at the time of writing in an IC card;
FIG. 7 is a view showing the comparison between the processing time taken in the first example of a command/response sequence at the time of occurrence of an error at the time of reading from an IC card and the processing time taken in the second example of a command/response sequence at the time of occurrence of an error at the time of reading from an IC card;
FIG. 8 is a view showing an example of the data structure of transmission data (write data) transmitted in the first example of a command/response sequence at the time of writing in an IC card;
FIG. 9 is a view showing an example of the data structure of transmission data (write data) transmitted in the second example of a command/response sequence at the time of writing in an IC card;
FIG. 10 is a view showing an example of the data structure of transmission data including a plurality of roughly divided data and a plurality of check codes respectively corresponding to the plurality of divided data; and
FIG. 11 is a view showing an example of the data structure of transmission data including a plurality of finely divided data and a plurality of check codes respectively corresponding to the plurality of divided data.

An embodiment of the present invention will be described below with reference to the views of the accompanying drawing.

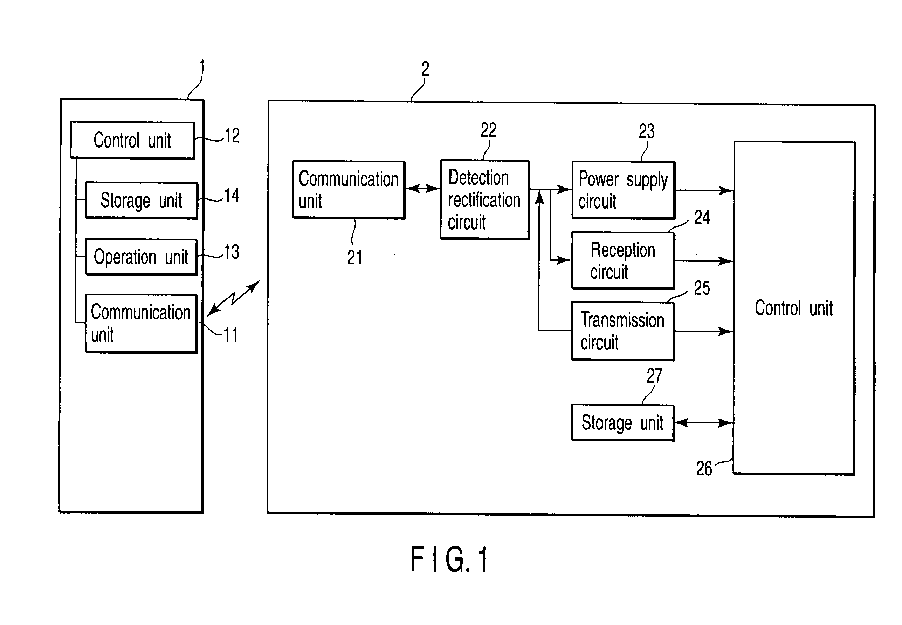

FIG. 1 is a block diagram showing the schematic arrangement of an IC card processing system (communication medium processing system) according to an embodiment of the present invention. As shown in FIG. 1, the IC card processing system comprises a terminal 1 (communication medium processing apparatus) such as an IC card reader/writer and a noncontact communication medium 2 such as a noncontact IC card. Although this embodiment will exemplify the noncontact communication medium 2 as a communication medium, the embodiment may use a contact communication medium.

The terminal 1 comprises a communication unit 11, control unit (CPU) 12, operation unit 13, and storage unit 14. The terminal 1 wirelessly communicates with the noncontact communication medium 2. The communication unit 11 modulates a transmission signal and demodulates a reception signal. The control unit 12 controls the operation of each unit on the basis of a demodulated reception signal. Upon receiving an instruction to write information in the noncontact communication medium 2 through the operation unit 13, the communication unit 11 modulates write data stored in the storage unit 14 into a transmission signal, transmits a write command to the noncontact communication medium 2, and further transmits the write data. Upon receiving an instruction to read out information from the noncontact communication medium 2 through the operation unit 13, the communication unit 11 transmits a read command to the noncontact communication medium 2 and receives read data from the noncontact communication medium 2.

The noncontact communication medium 2 comprises a card body in which a module is embedded. This module comprises a communication unit 21, detection rectification circuit 22, power supply circuit 23, reception circuit 24, transmission circuit 25, control unit 26, and storage unit 27. The detection rectification circuit 22 rectifies and outputs a signal from the terminal 1 which is received through the communication unit 21. The reception circuit 24 arbitrarily demodulates a predetermined carrier wave of the signal from the terminal 1 which is received through the detection rectification circuit 22, and outputs the resultant signal to the control unit 26. The power supply circuit 23 stabilizes the rectified output from the detection rectification circuit 22 and generates operating power. The power supply circuit 23 supplies this operation power to the control unit 26 and other circuit units (not shown). The noncontact communication medium 2 transmits read data stored in the storage unit 27 in accordance with a read command from the terminal 1. The noncontact communication medium 2 also receives write data transmitted in accordance with a write command from the terminal 1 and stores the data in the storage unit 27.

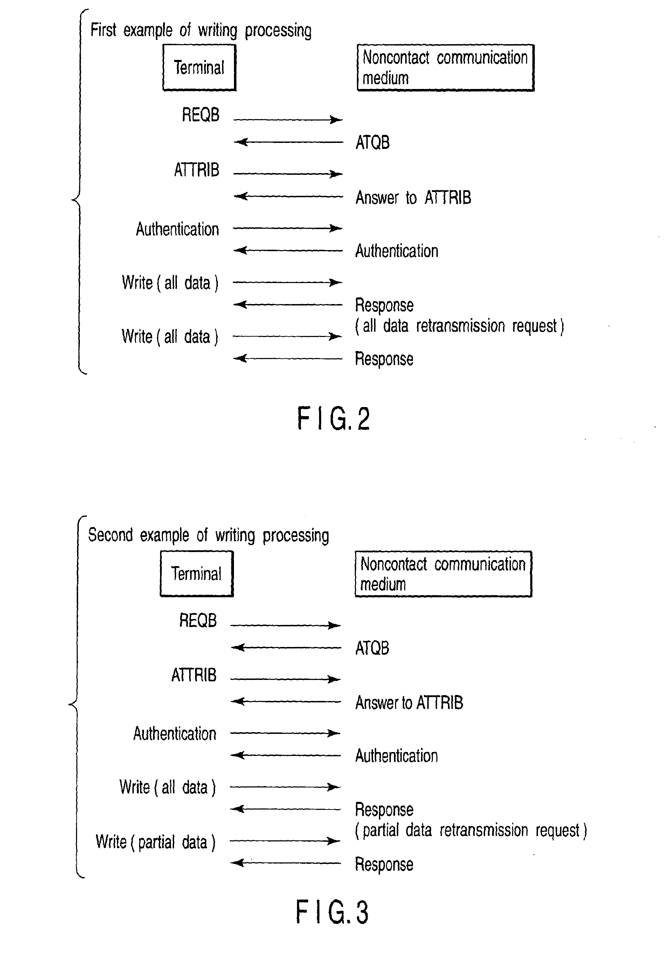

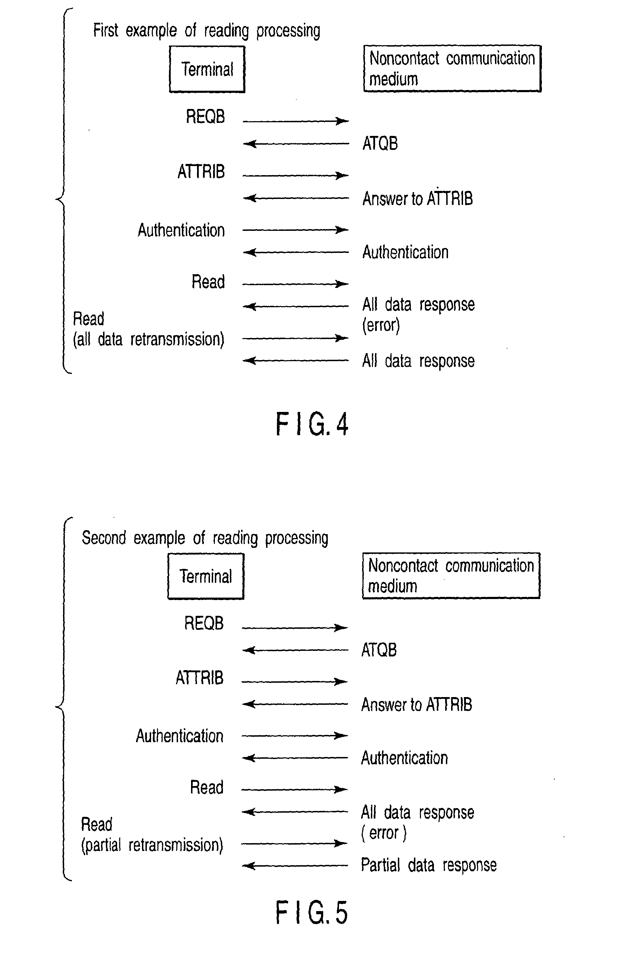

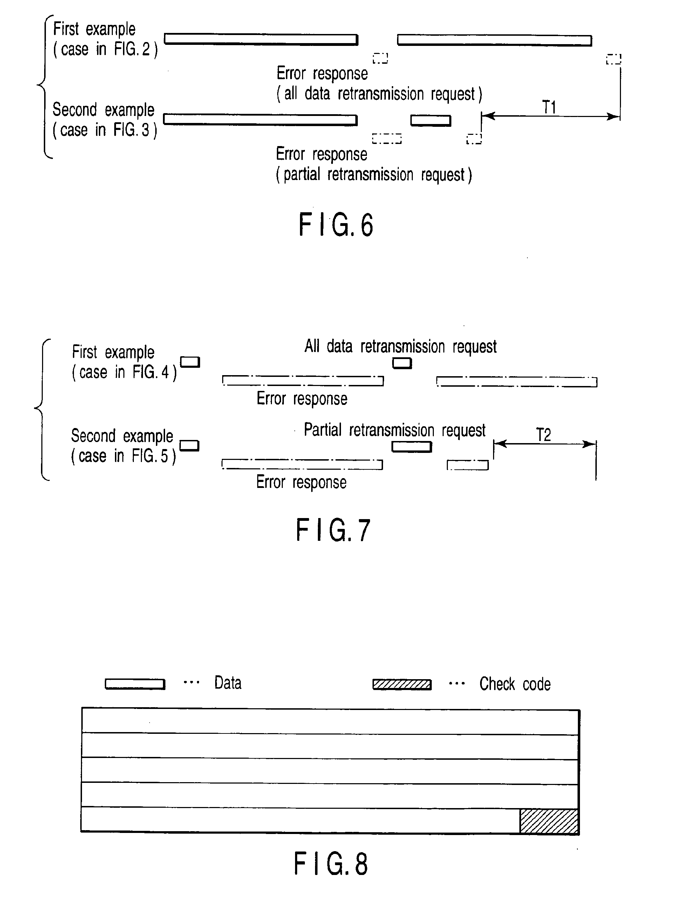

FIG. 2 is a view showing the first example (retransmitting all data at the time of occurrence of an error) of a command/response sequence at the time of writing in an IC card. As shown in FIG. 2, the terminal 1 transmits a REQB command, and the noncontact communication medium 2 returns ATQB (Answer To Request, Type B) in accordance with the REQB command. The terminal 1 transmits an ATTRIB command, and the noncontact communication medium 2 returns Answer to ATTRIB in accordance with the ATTRIB command. Assume that the initial command/response sequence performed so far determines a communication scheme between the terminal 1 and the noncontact communication medium 2, but does not determine the maximum value of the amount of data which can be transmitted by one operation, in particular.

In consideration of security, authentication is performed between the terminal 1 and the noncontact communication medium 2. Thereafter, the terminal 1 transmits a write command and write data to the noncontact communication medium 2. As described above, the maximum value of the amount of data which can be transmitted by one operation is not determined. If, therefore, the amount of write data is large and a request to retransmit all the data is issued because the noncontact communication medium 2 cannot normally receive the data due to the influence of noise or the like, the terminal 1 and the noncontact communication medium 2 exchange all the data again. This causes a delay in the communication processing time.

FIG. 8 is a view showing an example of the data structure of transmission data (write data) transmitted in the first example of a command/response sequence at the time of writing in an IC card. As shown in FIG. 8, a check code is attached to the overall transmission data. That is, the check code is inserted at the end of the large amount of data. In the case of such a data structure, it is difficult to detect in which part of the overall data an error has occurred. If, therefore, an error has occurred, all the data must be retransmitted.

FIG. 3 is a view showing the second example (retransmitting partial data at the time of occurrence of an error) of a command/response sequence at the time of writing in an IC card. As in the first example, the initial sequence does not define the maximum value of the amount of data which can be transmitted by one operation. When transmitting all data to the noncontact communication medium 2, the terminal 1 generates transmission data in the following manner. The control unit 12 of the terminal 1 divides the data stored in the storage unit 14 on a predetermined data unit basis, attaches a check code to each divided data obtained by this dividing operation, and generates transmission data including a plurality of divided data with the check codes.

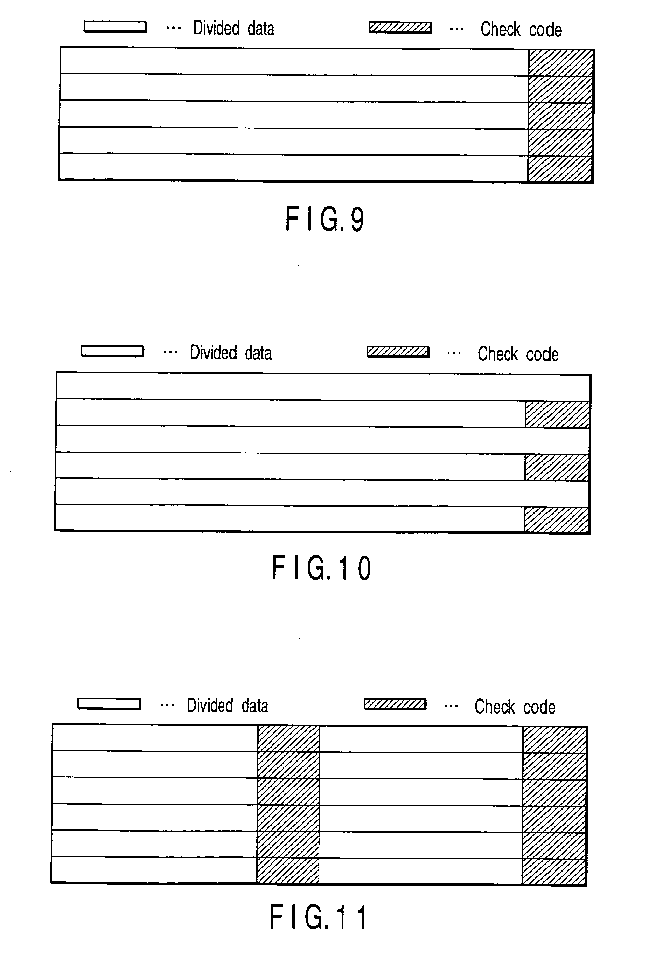

FIG. 9 is a view showing an example of the data structure of transmission data (write data) transmitted in the second example of a command/response sequence at the time of writing in an IC card. As shown in FIG. 9, the transmission data includes a plurality of divided data and a plurality of check codes respectively corresponding to the plurality of divided data. As described above, attaching a check code to each given data unit makes it possible to detect in which part of transmission data an error has occurred. When a communication error occurs, therefore, retransmission of partial data can cope with the problem. This makes it possible to shorten the communication time.

The communication unit 11 of the terminal 1 transmits the generated transmission data, i.e., the transmission data (all data) including a plurality of divided data with check codes, to the noncontact communication medium 2. Upon receiving the transmission data from the terminal 1, the noncontact communication medium 2 returns a response to the terminal 1. If this response contains a partial data retransmission request, the communication unit 11 and control unit 12 of the terminal 1 retransmit one or more divided data which are required to be retransmitted on the basis of the partial data retransmission request contained in the response. Upon receiving the retransmission data (partial data) from the terminal 1, the noncontact communication medium 2 returns a response to the terminal 1. If this response contains no retransmission request, communication between the terminal 1 and the noncontact communication medium 2 is normally terminated. As described above, adding a check code for each given data amount makes it possible to detect data, of the transmission data, which could not be properly received on the noncontact communication medium 2 side. Therefore, issuing a request to retransmit the data which could not be properly received, i.e., partial data, can cope with a communication error.

The generation of transmission data by the terminal 1 will be described in more detail. The control unit 12 of the terminal 1 may attach an address (block number) to each divided data (each block) described above to generate transmission data including a plurality of divided data with check codes and addresses. In this case, each check code may correspond to both divided data and an address. This makes it possible to check an error which has occurred in an address (data indicating an address).

Attaching an address to each divided data allows the noncontact communication medium 2 to issue a retransmission request by address designation. That is, the control unit 12 of the communication unit 11 receives a response from the noncontact communication medium 2, determines divided data required to be retransmitted on the basis of the address of the divided data required to be retransmitted which is contained in the response, and retransmits one or more divided data for which it is determined that retransmission is required.

That is, when errors have occurred in a plurality of portions (a plurality of blocks), notifying the remote terminal of information indicating in which blocks the errors have occurred makes it possible to improve the communication efficiency. When, for example, the terminal 1 is to write data in the noncontact communication medium 2, the noncontact communication medium 2 notifies the terminal 1 of information indicating in which data blocks errors have occurred. This allows the terminal 1 to retransmit only these block data.

In addition, the control unit 12 of the terminal 1 changes the size of the predetermined data unit on the basis of the occurrence frequency of communication errors with respect to the noncontact communication medium 2. If, for example, the occurrence frequency of communication errors exceeds a first level (the communication error occurrence frequency is high), the control unit 12 decreases the size of the predetermined data unit. FIG. 11 is a view showing an example of the data structure of transmission data including a plurality of finely divided data and a plurality of check codes respectively corresponding to the plurality of divided data. In contrast, if the occurrence frequency of communication errors becomes lower than a second level (second level < first level), the control unit 12 increases the size of the predetermined data unit. FIG. 10 is a view showing an example of the data structure of transmission data including a plurality of roughly divided data and a plurality of check codes respectively corresponding to the plurality of divided data. Suppressing the occurrence of communication errors by adjusting the divided data size in this manner makes it possible to improve the communication efficiency.

The above description is based on the assumption that addresses are attached to divided data. It is, however, conceivable to apply this embodiment to a case wherein no addresses are attached to divided data. In this case, the control unit 12 of the terminal 1 divides the data stored in the storage unit 14 on a predetermined data unit basis, and attaches check codes to the respective divided data obtained by this dividing operation (without attaching any addresses), thereby generating transmission data including a plurality of divided data with check codes. The communication unit 11 sequentially transmits the divided data with check codes contained in the transmission data to the noncontact communication medium 2. The control unit 12 of the terminal 1 retransmits one or more divided data with a check code or check codes on the basis of the timing of the reception of an error occurrence notification from the noncontact communication medium 2. For example, upon receiving an error occurrence notification from the noncontact communication medium 2 immediately after the transmission of the nth divided data, the control unit 12 of the terminal 1 retransmits the nth and subsequent divided data.

FIG. 6 is a view showing the comparison between the processing time taken at the time of occurrence of an error in the first example of a command/response sequence at the time of writing in an IC card and the processing time taken at the time of occurrence of an error in the second example of a command/response sequence at the time of writing in an IC card. As shown in FIG. 6, according to the second example of a command/response sequence at the time of writing in an IC card, not all data are retransmitted. That is, the second example of a command/response sequence at the time of writing in an IC card can decrease the size of data to be retransmitted more than the first example of a command/response sequence at the time of writing in an IC card. Therefore, the second example of a command/response sequence at the time of writing in an IC card can shorten time T1 more than the first example of a command/response sequence at the time of writing in an IC card.

FIG. 4 is a view showing the first example of a command/response sequence at the time of reading from an IC card (retransmitting all data at the time of occurrence of an error). As shown in FIG. 4, the terminal 1 transmits an REQB command, and the noncontact communication medium 2 returns ATQB in accordance with the REQB command. The terminal 1 then transmits an ATTRIB command, and the noncontact communication medium 2 returns Answer to ATTRIB in accordance with the ATTRIB command. Assume that the initial command/response sequence performed so far determines a communication scheme between the terminal 1 and the noncontact communication medium 2, but does not determine the maximum value of the amount of data which can be transmitted by one operation, in particular.

In consideration of security, authentication is performed between the terminal 1 and the noncontact communication medium 2. Thereafter, the terminal 1 transmits a read command to the noncontact communication medium 2, and the noncontact communication medium 2 transmits a response containing read data (all data) to the terminal 1. As described above, the maximum value of the amount of data which can be transmitted by one operation is not determined. If, therefore, the amount of read data is large and a request to retransmit all the data is issued because the terminal 1 cannot normally receive the data due to the influence of noise or the like, the terminal 1 and the noncontact communication medium 2 exchange all the data again. This causes a delay in the communication processing time.

FIG. 8 is a view showing an example of the data structure of transmission data (read data) transmitted in the first example of a command/response sequence at the time of reading from an IC card. As shown in FIG. 8, a check code is attached to the overall transmission data.

FIG. 5 is a view showing the second example (retransmitting partial data at the time of occurrence of an error) of a command/response sequence at the time of reading from an IC card. As in the first example, the initial sequence does not define the maximum value of the amount of data which can be transmitted by one operation. When transmitting all data to the terminal 1, the noncontact communication medium 2 generates transmission data in the following manner. The control unit 26 of the noncontact communication medium 2 divides the data stored in the storage unit 27 on a predetermined data unit basis, attaches a check code to each divided data obtained by this dividing operation, and generates transmission data including a plurality of divided data with the check codes.

FIG. 9 shows an example of the data structure of transmission data (read data) transmitted in the second example of a command/response sequence at the time of reading from an IC card. As shown in FIG. 9, the transmission data includes a plurality of divided data and a plurality of check codes respectively corresponding to the plurality of divided data. The communication unit 21 of the noncontact communication medium 2 transmits the generated transmission data, i.e., the transmission data (all data) including a plurality of divided data with check codes, to the terminal 1.

The terminal 1 receives the response containing the transmission data from the noncontact communication medium 2. If the terminal 1 cannot receive all the transmission data (when a communication error occurs), the terminal 1 issues a request to retransmit partial data to the noncontact communication medium 2. The communication unit 11 and control unit 12 of the terminal 1 retransmit one or more divided data required to be retransmitted on the basis of the partial data retransmission request. The terminal 1 receives the retransmission data (partial data) from the noncontact communication medium 2, and normally terminates the communication. Attaching a check code for each given data amount in this manner makes it possible to detect data, of the transmission data, which could not be properly received on the terminal 1 side. Therefore, issuing a request to retransmit the data which could not be properly received, i.e., partial data, makes it possible to cope with a communication error.

The generation of transmission data by the noncontact communication medium 2 will be described in more detail. The control unit 26 of the noncontact communication medium 2 may attach an address to each divided data described above to generate transmission data including a plurality of divided data with check codes and addresses. In this case, each check code may correspond to both divided data and an address. This makes it possible to check an error which has occurred at an address (data indicating an address).

Attaching an address to each divided data in this manner allows the terminal 1 to issue a retransmission request by address designation. That is, the communication unit 21 and control unit 26 of the noncontact communication medium 2 determine divided data required to be retransmitted on the basis of the address of the divided data required to be retransmitted from the terminal 1, and retransmit one or more divided data for which it is determined that retransmission is required.

That is, when errors have occurred in a plurality of portions (a plurality of blocks), notifying the remote terminal of information indicating in which blocks the errors have occurred makes it possible to improve the communication efficiency. When, for example, the terminal 1 is to read data from the noncontact communication medium 2, the terminal 1 notifies the noncontact communication medium 2 of information indicating in which data blocks errors have occurred. This allows the noncontact communication medium 2 to retransmit only these block data.

In addition, the control unit 26 of the noncontact communication medium 2 changes the size of the predetermined data unit on the basis of the occurrence frequency of communication errors with respect to the terminal 1. If, for example, the occurrence frequency of communication errors exceeds a first level (the communication error occurrence frequency is high), the control unit 26 decreases the size of the predetermined data unit. FIG. 11 is a view showing an example of the data structure of transmission data including a plurality of finely divided data and a plurality of check codes respectively corresponding to the plurality of divided data. In contrast, if the occurrence frequency of communication errors becomes lower than a second level (second level < first level), the control unit 26 increases the size of the predetermined data unit. FIG. 10 is a view showing an example of the data structure of transmission data including a plurality of roughly divided data and a plurality of check codes respectively corresponding to the plurality of divided data. Suppressing the occurrence of communication errors by adjusting the divided data size in this manner makes it possible to improve the communication efficiency.

The above description is based on the assumption that addresses are attached to divided data. It is, however, conceivable to apply this embodiment to a case wherein no addresses are attached to divided data. In this case, the control unit 26 of the noncontact communication medium 2 divides the data stored in the storage unit 27 on a predetermined data unit basis, and attaches check codes to the respective divided data obtained by this dividing operation (without attaching any addresses), thereby generating transmission data containing a plurality of divided data with check codes. The communication unit 21 of the noncontact communication medium 2 sequentially transmits the divided data with check codes contained in the transmission data to the terminal 1. The control unit 26 of the noncontact communication medium 2 retransmits one or more divided data with a check code or check codes on the basis of the timing of the reception of an error occurrence notification from the terminal 1. For example, upon receiving an error occurrence notification from the terminal 1 immediately after the transmission of the nth divided data, the control unit 26 of the noncontact communication medium 2 retransmits the nth and subsequent divided data.

However, the noncontact communication medium 2 cannot stop transmitting data at the time of occurrence of an error, and keeps transmitting all data. In the case of the noncontact communication medium 2 capable of full-duplex communication, when an error occurs, the terminal 1 notifies the noncontact communication medium 2 of the corresponding information. This allows the noncontact communication medium 2 to stop the communication of all data halfway and transmit data after the occurrence of the error.

FIG. 7 is a view showing the comparison between the processing time taken at the time of occurrence of an error in the first example of a command/response sequence at the time of reading from an IC card and the processing time taken at the time of occurrence of an error in the second example of a command/response sequence at the time of reading from an IC card. As shown in FIG. 7, according to the second example of a command/response sequence at the time of writing in an IC card, not all data are retransmitted. That is, the second example of a command/response sequence at the time of writing in an IC card can decrease the size of data to be retransmitted more than the first example of a command/response sequence at the time of writing in an IC card. Therefore, the second example of a command/response sequence at the time of writing in an IC card can shorten time T2 more than the first example of a command/response sequence at the time of writing in an IC card.

This embodiment will be summarized below.

The following is the gist of this embodiment.

Assume that the initial command/response sequence or the like defines the amount of data which can be transmitted/received by one operation. In this case, if the amount of data to be transmitted/received is larger than the defined data amount, it is necessary to separately transmit/receive divided data a number of times, resulting in poor communication efficiency. In addition, if the amount of data which can be transmitted/received by one operation is not defined, it is necessary to retransmit all data at the time of occurrence of a communication error. This also leads to poor communication efficiency. This embodiment, therefore, divides data to be transmitted/received for each given data amount and inserts a check code in each divided data. That is, the data to be transmitted/received includes a plurality of divided data and a plurality of check codes respectively corresponding to the plurality of divided data. This makes it possible to set the number of times of transmission/reception to one, unless any communication error occurs. Even if a communication error occurs, it is unnecessary to retransmit all the data. That is, retransmitting only divided data in which the error has occurred makes it possible to cope with the communication error. This can improve the communication efficiency.

Although this embodiment has exemplified ISO/IEC14443 TypeB as a communication procedure, the present invention can be applied to a case wherein another communication protocol is used.

## Claims

1. A communication medium which transmits read data in accordance with a read command from a communication medium processing apparatus and stores write data transmitted in accordance with a write command from the communication medium processing apparatus, **characterized by** comprising
a card body (2) in which a module is embedded,
the module comprising
a storage unit (27) configured to store data,
a transmission data generating unit (26) configured to divide data stored in the storage unit on a predetermined data unit basis, attach a check code to each divided data obtained by dividing the data, and generate transmission data including a plurality of divided data with check codes, and
a communication unit (21) configured to transmit the transmission data generated by the transmission data generating unit to the communication medium processing apparatus.

2. A medium according to claim 1, **characterized in that** the communication unit receives a transmission result of the transmission data from the communication medium processing apparatus, and retransmits one or more divided data for which it is determined on the basis of the transmission result that retransmission is required.

3. A medium according to claim 1, **characterized in that** the transmission data generating unit attaches an address to each divided data, and generates the transmission data including the plurality of divided data with the check codes and addresses.

4. A medium according to claim 3, **characterized in that** the transmission data generating unit attaches the check code corresponding to both the divided data and the address.

5. A medium according to claim 3, **characterized in that** the communication unit receives a transmission result on the transmission data from the communication medium processing apparatus, determines divided data required to be retransmitted on the basis of an address of divided data required to be retransmitted, which is contained in the transmission result, and retransmits one or more divided data for which it is determined that retransmission is required.

6. A medium according to claim 1, **characterized in that** the transmission data generating unit changes a size of the predetermined data unit on the basis of an occurrence frequency of a communication error with respect to the communication medium processing apparatus.

7. A medium according to claim 1, **characterized in that** the communication unit sequentially transmits divided data with check codes which are included in the transmission data to the communication medium processing apparatus, and retransmits one or more divided data with check codes, which are included in the transmission data, on the basis of a timing of reception of an error occurrence notification from the communication medium processing apparatus.

8. A communication medium processing apparatus which receives read data transmitted from a communication medium in accordance with a read command with respect to the communication medium, and transmits write data to the communication medium in accordance with a write command with respect to the communication medium, **characterized by** comprising:
a storage unit (14) configured to store data;
a transmission data generating unit (12) configured to divide data stored in the storage unit on a predetermined data unit basis, attach a check code to each divided data obtained by dividing the data, and generate transmission data including a plurality of divided data with check codes; and
a communication unit (11) configured to transmit the transmission data generated by the transmission data generating unit to the communication medium.

9. An apparatus according to claim 8, **characterized in that** the communication unit receives a transmission result on the transmission data from the communication medium, and retransmits one or more divided data for which it is determined on the basis of the transmission result that retransmission is required.

10. An apparatus according to claim 8, **characterized in that** the transmission data generating unit attaches an address to each divided data, and generates the transmission data including the plurality of divided data with the check codes and addresses.

11. An apparatus according to claim 10, **characterized in that** the transmission data generating unit attaches the check code corresponding to both the divided data and the address.

12. An apparatus according to claim 10, **characterized in that** the communication unit receives a transmission result on the transmission data from the communication medium, determines divided data required to be retransmitted on the basis of an address of divided data required to be retransmitted, which is contained in the transmission result, and retransmits one or more divided data for which it is determined that retransmission is required.

13. An apparatus according to claim 8, **characterized in that** the transmission data generating unit changes a size of the predetermined data unit on the basis of an occurrence frequency of a communication error with respect to the communication medium.

14. An apparatus according to claim 8, **characterized in that** the communication unit sequentially transmits divided data with check codes which are included in the transmission data to the communication medium, and retransmits one or more divided data with check codes, which are included in the transmission data, on the basis of a timing of reception of an error occurrence notification from the communication medium.

15. A communication medium processing system **characterized by** comprising:
a communication medium (2) configured to transmit read data in accordance with a read command from a communication medium processing apparatus and store write data transmitted in accordance with a write command from the communication medium processing apparatus; and
a communication medium processing apparatus (1) configured to receive the read data transmitted from the communication medium in accordance with the read command with respect to the communication medium and transmit the write data to the communication medium in accordance with the write command with respect to the communication medium,
the communication medium comprising
a first storage unit (27) configured to store data,
a first transmission data generating unit (26) configured to divide data stored in the first storage unit on a predetermined data unit basis, attach a check code to each divided data obtained by dividing the data, and generate transmission data including a plurality of divided data with check codes, and
a first communication unit (21) configured to transmit the transmission data generated by the first transmission data generating unit to the communication medium processing apparatus in accordance with a read command from the communication medium processing apparatus, and
the communication medium processing apparatus (1) comprising
a second storage unit (14) configured to store data,
a second transmission data generating unit (12) configured to divide data stored in the second storage unit on a predetermined data unit basis, attach a check code to each divided data obtained by dividing the data, and generate transmission data including a plurality of divided data with check codes, and
a second communication unit (11) configured to transmit the transmission data generated by the second transmission data generating unit to the communication medium in accordance with a write command with respect to the communication medium.
